# EUROPÄISCHE PATENTSCHRIFT

(11) **EP 2 136 064 B1**
(45) Veröffentlichungstag und Bekanntmachung des Hinweises auf die Patenterteilung: **03.08.2016**
(21) Anmeldenummer: 09003945.4
(22) Anmeldetag: 19.03.2009
(51) Int. Cl.: F02K 9/62, F02K 9/68, F02K 9/58, F02K 9/70, F02K 9/86

(54) **Gasgenerator**
Gas generator
Générateur de gaz

(30) Priorität: 19.06.2008 DE 102008029150
(43) Veröffentlichungstag der Anmeldung: 23.12.2009
(73) Patentinhaber: Bayern-Chemie Gesellschaft für flugchemische Antriebe mbH, 84544 Aschau a. Inn (DE)
(72) Erfinder: Wieland Naumannl, Karl, Dr., 84453 Mühldorf (DE); Stierle, Ralf, 83533 Edling (DE); Ramsel, Jürgen, 84559 Kraiburg (DE); Schmid, Konrad, 93613 Sinzing (DE)
(74) Vertreter: LS-MP von Puttkamer Berngruber Loth Spuhler

(56) Entgegenhaltungen:
- CH-A- 259 489
- DE-A1-102005 030 437
- US-A- 4 754 602
- US-A- 5 394 690
- US-A1- 2007 228 013

## Beschreibung

Die Erfindung bezieht sich auf einen Gasgenerator mit einer Brennkammer, der ein Treibstoff zugeführt wird, nach dem Oberbegriff des Anspruchs 1.

Bekannt sind Gasgeneratoren mit einem Feststofftreibsatz, einem Feststoff, der durch Reaktion mit einer Flüssigkeit ein kaltes Gas erzeugt, sowie mit flüssigen Treibstoffen.

Als Explosiv- und Gefahrstoff unterliegt ein Festtreibstoff hinsichtlich der Herstellung, Lagerung, Transport, Handhabung, Verarbeitung, Einsatz und Entsorgung besonderen gesetzlichen Bestimmungen. Dadurch wird die Herstellung, Logistik und der Einsatz von leistungsstarken Heißgas-Gasgeneratoren mit einem Feststofftreibsatz in jeder Hinsicht erschwert.

Die sogenannten Kaltgas-Generatoren beinhalten zwar keine Explosivstoffe, sind aber für viele leistungsgetriebene Anwendungen nicht geeignet, wie z. B. die Versorgung von Bahn- und Lageregelungstriebswerken von Flugkörpern oder Notauftauchsystemen von U-Booten. Flüssigtreibstoff-Gasgeneratoren sind zwar grundsätzlich explosivstofffrei, aber häufig leichtentzündlich. Die Gefahr des Auslaufens der umweltbelastenden und ggf. leichtentzündlichen Flüssigkeiten durch Unfälle oder Handhabungsfehler schränkt ihre Einsatzmöglichkeiten jedoch erheblich ein. Deshalb sind Flüssigtreibstoffe, insbesondere bei nicht Luft atmenden Antrieben, aus vielen Anwendungen verschwunden.

Aus der US-Patentschrift 5,394,690 ist ein Gasgenerator mit einer Brennkammer bekannt, der ein Treibstoff zugeführt wird, wobei diese wenigstens eine Auslassöffnung für das Verbrennungsgas aufweist und wobei der der Brennkammer zugeführte Treibstoff ein fließfähiger, anzündträger Treibstoff ist und zur Aufrechterhaltung eines Mindestdrucks in der Brennkammer zur Verbrennung des Treibstoffs einer Einrichtung zur Regelung des Querschnitts der Auslassöffnung vorgesehen ist.

Aus der US 2007/0228013 A1 ist ein Gasgeneratorsystem offenbart, das auf den Einsatz von Festtreibstoffen eingerichtet ist, wobei die Brennkammer auch die Funktion des Tanks übernimmt, und wobei ein Ventilmechanismus vorgesehen ist, der die Aufgabe hat, einen bereits bestehenden Druck in der Brennkammer zu mindern und dadurch die Abbrandrate des Festtreibstoffs konstant zu halten.

Aufgabe der Erfindung ist es, einen einfach aufgebauten, ganz, jedenfalls weitgehend explosivstofffreien, und die Umwelt nicht belastenden Gasgenerator hoher Leistung bereitzustellen. Insbesondere soll gewährleistet sein, dass ein für die Verbrennung des Treibstoffs in der Brennkammer erforderlicher Druck aufrecht erhalten werden kann, wobei dies auch dann gewährleistet werden soll, wenn ein sparsamer Betrieb angestrebt ist

Dies wird erfindungsgemäß mit dem im Anspruch 1 gekennzeichneten Gasgenerator erreicht. In den übrigen Ansprüchen sind vorteilhafte Ausgestaltungen der Erfindung wiedergegeben.

Der erfindungsgemäße Gasgenerator wird mit einem fließfähigem anzündfähigen Treibstoff, insbesondere einem gelförmigen Treibstoff betrieben. Ein solcher Treibstoff zeigt ein insensitives Verhalten, sodass Explosionen oder Feuerbälle ausgeschlossen werden können. Damit wird die Herstellung, Logistik und der Einsatz des Gasgenerators wesentlich erleichtert.

Die Anzündung des Treibstoffs erfolgt vorzugsweise entweder durch einen Gasbrenner, katalytisch oder eine pyrotechnische oder pyrogene Ladung. Die pyrotechnische oder pyrogene Ladung kann dabei so klein ausgelegt werden, dass sie zu keinen explosivstofftypischen Problemen bei der Herstellung, der Logistik und dem Einsatz des Gasgenerators führt. So kann beispielsweise die Anzündvorrichtung aus einer Anzündpille, die beispielsweise elektrisch oder mit einem Schlagbolzen initiiert wird und einer pyrogenen Übertragungsladung bestehen, beispielsweise aus Schwarzpulver, einem Bor-Kaliumnitrat-Gemisch oder dergleichen. Das Anzündpulver kann dabei unverdämmt oder verdämmt sein, also sich beispielsweise in einem Pulverbeutel befinden.

Die Anzündvorrichtung ist dabei derart auszulegen, dass sie sowohl die benötigte Wärme als auch das für die Initiierung der Verbrennung des Treibstoffs benötigte Druckniveau in der Brennkammer erzeugt. Demgemäss wird bei der Anzündung des Treibstoffs die Auslassöffnung der Brennkammer geschlossen, jedenfalls ein möglichst kleiner Auslassöffnungsquerschnitt mit der Einrichtung zur Regelung des Auslassöffnungsquerschnitts eingestellt.

Wenn der Druck in der Brennkammer den für eine sichere Verbrennung des zugeführten fließfähigen Treibstoffs erforderliche Mindestanzünddruck überschritten hat, wird der Druck in der Brennkammer mit der Einrichtung zur Regelung des Auslassöffnungsquerschnitts so eingestellt, dass in der Brennkammer ein Druck aufrecht erhalten wird, der deutlich über dem Mindestanzünddruck liegt, beispielsweise von mehr als 10, insbesondere mehr als 30 bar.

Der fließfähige Treibstoff kann eine bei Raumtemperatur flüssige, monergole Treibstoffkomponente enthalten, insbesondere einen Kohlenwasserstoff, der wenigstens eine Nitrogruppe enthält. Der die Nitrogruppe enthaltende Kohlenwasserstoff kann beispielsweise Nitromethan oder Nitroethan sein.

Statt eines monergolen Treibstoffs kann jedoch auch ein Treibstoff eingesetzt werden, der zur Verbrennung ein Oxidationsmittel benötigt. Das Oxidationsmittel, das in einem vom Treibstoff getrennten Vorratsbehälter enthalten sein kann, ist dabei ebenfalls vorzugsweise fließfähig ausgebildet, also wie der Treibstoff flüssig oder gelförmig. Auch kann der Treibstoff und gegebenenfalls das Oxidationsmittel als Schlamm eingesetzt werden. Als Komponente des Oxidationsmittels kann ein wasserlösliches Salz, insbesondere ein Ammonium- oder Hydroxylammonium-Salz auf Nitramid- oder Nitrat- Basis verwendet werden, beispielsweise Ammoniumdinitramid oder Hydroxylammoniumnitrat.

Als anzündträger Treibstoff wird erfindungsgemäß bevorzugt ein gelförmiger Treibstoff eingesetzt. Der Gelbildner kann beispielsweise ein anorganischer Gelbildner, wie pyrogene Kieselsäure, z. B. Aerosil ® oder ein organischer Gelbildner, beispielsweise ein LMOG sein. Für das Oxidationsmittel kann beispielsweise ein anorganischer Gelbildner, wie pyrogene Kieselsäure eingesetzt werden.

Die Förderung des fließfähigen Treibstoffs und gegebenenfalls des fließfähigen Oxidationsmittels kann durch Bedrückung mit einem inerten Gas oder mit Luft, gegebenenfalls auch mittels Festtreibstoff-Gasgeneratoren erfolgen, deren Treibstoffmasse nur einen Bruchteil der Masse des zu fördernden Treibstoffs bzw. Oxidationsmittels ausmacht. Auch kommen mechanisch angetriebene Kolben oder dergleichen Vorrichtungen zur Förderung des fließfähigen Treibstoffs bzw. Oxidationsmittels in Betracht.

Der gelförmige Treibstoff kann auch feste Brennstoffteilchen enthalten, beispielsweise Teilchen aus Metall, wie Bor, Aluminium, Magnesium, Silikon und/oder Zirkon, Kohlenstoff oder andere energetische Feststoffe. Der Vorteil des Gels besteht darin, dass sich diese Teilchen nicht mit der Zeit absetzen. Aus welchem Stoff die Teilchen bestehen, und in welcher Konzentration sie eingesetzt werden, hängt auch von der erlaubten Partikelkonzentration in dem Verbrennungsgas, also dem vom Gasgenerator erzeugten Gas ab. Die höchst mögliche Feststoffpartikelkonzentration und die Verteilung der Partikelgrößen richtet sich nach den Erfordernissen der Förderung, Durchflussregelung, Einspritzung und Verbrennung des Gels im Gasgenerator und den geforderten Eigenschaften der Gasgeneratorverbrennungsprodukte.

Ebenfalls geeignet ist die Zumischung von bevorzugt auf Kohlenwasserstoff, gegebenenfalls auch auf Silikon basierenden und anderen Stoffen, die in der Brennkammer des Gasgenerators nur verdampfen und damit die Temperatur vermindern und in einer weiteren Brennkammer dann mit dem zugeführten Oxidationsmittel verbrennen. Durch die hohe Temperatur und den hohen Druck in der Brennkammer des Gasgenerators können diese zugemischten Stoffe, insbesondere Kohlenwasserstoffe, gegebenenfalls gecrackt, also in kleinere Moleküle aufgespalten werden. Dieser Prozess vermindert ebenfalls die Temperatur in der Brennkammer des Gasgenerators und verbessert das chemische Reaktionsvermogen des zugemischten Stoffes in der Brennkammer. Die gleichzeitige Beigabe von festen Partikeln und Flüssigkeiten in der Brennkammer ist ebenfalls möglich. Der erfindungsgemäße Gasgenerator kann auch mit einem sich katalytisch zersetzendem fließfähigem Treibstoff bzw. Oxidationsmittel betrieben werden.

Die Absenkung der Temperatur des im Gasgenerator erzeugten Gases kann ebenfalls geschehen, indem nach der Verbrennung bzw. Zersetzung des Treibstoffs ein anderer Stoff zugemischt wird, der aus der flüssigen oder festen Phase in die Gasphase übergeht und so zugleich das Gasvolumen vergrößert und die Gastemperatur absenkt.

Falls der erfindungsgemäße Gasgenerator ein brennstoffreiches Gemisch erzeugen soll, beispielsweise für den Betrieb eines Staustrahlantriebs oder eines Luft atmenden, also unter Luftzuführung betriebenen Motors, wird besonders zweckmäßig ein mit festem Brennstoffpartikeln versetzter gelförmiger Treibstoff verwendet.

Der Treibstoff kann einen Zusatz enthalten, z. B. Metall- oder Kohlenstoffpartikel, die nicht im Gasgenerator, sondern n einer nachgeschalteten Brennkammer mit Luftsauerstoff oder einem Oxidator verbrennen. Auch kann der Zusatz crackbar sein, also in dem Gasgenerator in kleiner Bestandteile gespalten werden, die dann in einer nachgeschalteten Brennkammer, z. B. unter Zufuhr von Luft oder einem anderen Oxidator verbrannt werden.

Der erfindungsgemäße Gasgenerator weist eine Einrichtung zur Regelung des Querschnitts der Auslassöffnung auf. Dadurch kann in der Brennkammer der zur Verbrennung des fließfähigen anzündträgen Treibstoffs erforderliche Druck aufrecht erhalten werden, also ein Druck von beispielsweise mehr als 10, insbesondere mehr als 30 bar.

Durch die Einrichtung zur Regelung des Querschnitts der Auslassöffnung des Gasgenerators, also durch die variable Klemmung wird der Druck in der Brennkammer stets oberhalb des Mindestdrucks gehalten, also auch bei minimalen Massenstrom, wodurch ein sparsamer Betrieb ermöglicht wird, wobei wenig Gas erzeugt werden muss.

Erfindungsgemäß kann die Brennkammer z. B. im Boden eine Zylinderbohrung aufweisen und der Ventilkörper durch einen zur Brennkammer hin offenen, in der Zylinderbohrung verschiebbar geführten Hohlkolben gebildet sein, der mit wenigstens einer Auslassöffnung versehen ist, wobei der Querschnitt der Auslassöffnung durch die von dem Brennraum abgewandte Kante der Zylinderbohrung geregelt wird, die die Auslassöffnung in dem Hohlkolben je nach dem Druck in der Brennkammer mehr oder weniger übergreift, also die Steuerkante bildet. Dabei kann der Hohlkolben gleichfalls mit einer Feder in die die Auslassöffnung reduzierende Position federbelastet sein.

Um Oszillationen des Ventilkörpers zu vermeiden, kann eine Einrichtung zur Dämpfung des Ventilkörpers vorgesehen sein. Die Dämpfungseinrichtung kann dabei so ausgebildet sein, dass sie mit dem Verbrennungsgas beaufschlagt wird.

Dazu kann der Ventilkörper mit einem Kolben versehen sein, der in einem Zylinder verschiebbar ist, um z. B. zwischen dem Boden und dem Zylinderboden, den der Ventilkörper durchragt, einen mit dem Verbrennungsgas gefüllten Arbeitsraum zu bilden, wobei sowohl zwischen dem Ventilkörper und dem Zylinderboden wie zwischen dem Zylinder und dem Kolben jeweils ein Spalt vorgesehen ist, durch den das Verbrennungsgas in den Arbeitsraum ein- bzw. austreten kann.

Stattdessen kann die Dämpfungseinrichtung einen Dämpfungszylinder aufweisen, der in einen am Ventilkörper vorgesehenen Hubraum eingreift und mit wenigstens einem Fluiddurchlass zum Durchströmen eines Fluids zwischen Hubraum und dem Inneren des Dämpfungszylinders versehen ist.

Der erfindungsgemäße Gasgenerator ist sowohl in der Lagerung, wie beim Transport, der Handhabung im Einsatz und bei der Entsorgung einfach zu handhaben. Personal mit speziellen Fähigkeiten wird daher nicht benötigt. Im Vergleich zu Festtreibstoff-Gasgeneratoren weist er ein viel besseres Regelungsverhalten auf und damit eine längere Betriebsdauer, insbesondere bei stark schwankendem Gasmassenstrombedarf. Der erfindungsgemäße Gasgenerator ist daher beispielsweise zur Versorgung von Bahn- und Lageregelungstriebwerken von Flugkörpern, Satelliten und ähnlichen Geräten, insbesondere auch für exoatmosphärische Anwendungen hervorragend geeignet. Darüber hinaus kann er z. B. für Notauftauchsysteme von U-Booten eingesetzt werden, aber auch für zahlreiche andere Anwendungen, insbesondere nicht Luft atmende, also ohne Luft betriebene Antriebe, aber auch für Leinenwurfgeräte, Fallschirmauszugsraketen und dergleichen.

Nachstehend ist die Erfindung anhand der beigefügten Zeichnung beispielhaft näher erläutert. Darin zeigen jeweils schematisch:
Figur 1 einen Längsschnitt durch einen bekannten Gasgenerator;
Figur 2 einen Längsschnitt durch einen Teil eines Gasgenerators nach der erfindungsgemäßen Ausführungsform;
Figur 2a i-iv unterschiedliche Ausbildungen der Auslassöffnung des Hohlkolbens und der Steuerkante bei der Ausführungsform nach Figur 2;
Figur 3 einen Längsschnitt durch einen Teil eines weiteren bekannten Gasgenerators; und
Figur 4 einen Längsschnitt durch einen Teil eines ebenfalls weiteren bekannten Gasgenerators.

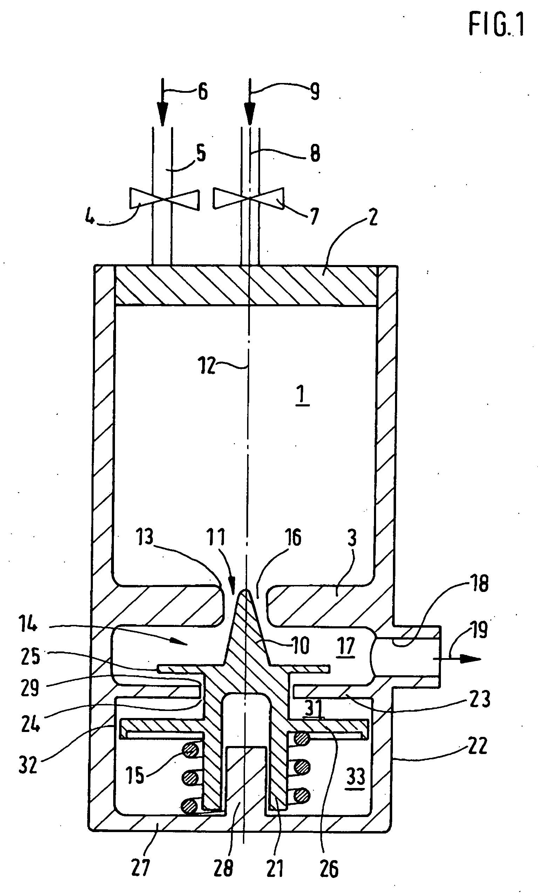

Die in den Figuren 1, 3, 4 gezeigten Ausführungsbeispiele sind nicht Teil der Erfindung und dienen, soweit sie den Stand der Technik umschreiben, der Erleichterung des Verständnisses der Erfindung.

Gemäß Figur 1 weist der Gasgenerator eine Brennkammer 1 auf, die an einem Ende durch den Injektorkopf 2 und am anderen Ende durch den Brennkammerboden 3 verschlossen ist. An den Injektorkopf 2 ist die mit einem Steuerventil 4 versehene Leitung 5 zur Zufuhr eines gelförmigen Treibstoffs (Pfeil 6) und die mit einem Steuerventil 7 versehene Leitung 8 zur Zufuhr eines Oxidationsmittels (Pfeil 9) angeschlossen.

Die Regelung der Zufuhr des Treibstoffs 6 und des Oxidationsmittels 9 erfolgt über die aktive angesteuerten Ventile 4 bzw. 7. Weitere Regelungsmöglichkeiten sind durch den Förderdruck in den nicht dargestellten Tanks für den Treibstoff 6 bzw. das Oxidationsmittel 9 oder eine Volumenänderung dieser Tanks z. B. durch Bewegung eines Kolbens realisierbar.

Um den gelförmigen Treibstoff 6 zu verbrennen, muss in der Brennkammer 1 ein Mindestdruck aufrecht erhalten werden. Bei zu niedrigem Druck kann nämlich der Verbrennungswirkungsgrad abnehmen und die Verbrennung gegebenenfalls verlöschen. Andererseits würde eine für einen zu hohen Druck ausgelegte Brennkammer 1 überflüssig schwer bauen und noch höhere Förderdrücke für den Treibstoff 6 und das Oxidationsmittel 9 benötigen.

Zur Aufrechterhaltung des Mindestdrucks in der Brennkammer zur Verbrennung des Treibstoffs ist daher erfindungsgemäß eine Einrichtung 11 zur Regelung und des Querschnitts der Auslassöffnung 16 vorgesehen. Die Auslassöffnungsquerschnittsreglungsvorrichtung 11 wird durch eine Drossel gebildet. Dazu ist im Brennkammerboden 3 eine zur Brennkammerlängsachse 12 koaxiale Öffnung 13 vorgesehen, in der ein Ventilkörper 14 eingreift, der als Kegel 10 ausgebildet und in Richtung der Längsachse 12 verschiebbar ist. Damit wird zwischen dem Ventilkörper 14 und der Öffnung 13 des Brennkammerbodens 2 eine ringförmige Auslassöffnung 16 gebildet, deren Querschnitt abnimmt, je weiter der kegelförmige Ventilkörper 14 in die Öffnung 13 hineinragt. Der Ventilkörper 14 wird mit einer Druckfeder 15 in eine den Querschnitt der ringförmigen Auslassöffnung 16 reduzierende Position belastet.

Die in der Brennkammer 1 durch Verbrennung des Treibstoffs 6 mit dem Oxidationsmittel 9 gebildeten Verbrennungsgase treten über die ringförmige Auslassöffnung 16 in eine Austrittskammer 17 des Gasgenerators ein und gelangen dann über einen Gasaustritt 18 gemäß dem Pfeil 19 zu dem nicht dargestellten Verbraucher.

Der Ventilkörper 14 ist mit einem Ansatz 21 versehen, der in einem Zylinder 22 angeordnet ist, der sich an die Austrittskammer 17 koaxial zur Brennkammer 1 anschließt. Der Zylinder 22 ist mit einem Zylinderboden 23 versehen, der den Zylinder 22 von der Austrittskammer 17 trennt. Der Zylinderboden 23 weist eine Öffnung 24 auf, durch die der Ansatz 21 ragt.

Der kegelförmige Ventilkörper 14 ist an seiner Basis, an die sich der Ansatz 21 anschließt, mit einem Teller 25 oder dergleichen Anschlag versehen, wobei der Brennkammerboden 3 und der Zylinderboden 23 die Gegenanschläge bilden, die die Bewegung des Ventilkörpers 14 zu der Brennkammer 1 bzw. von ihr weg begrenzen. Damit stösst der Anschlag 25 einerseits gegen den Brennkammerboden 3, andererseits fährt der Ventilkörper 14 nicht weiter als geometrisch sinnvoll aus der Öffnung 13 heraus.

In dem Zylinder 22 ist an dem Ansatz 21 ein Kolben 26 vorgesehen. An dem Kolben 26 stützt sich die Druckfeder 15 ab, die mit ihren anderen Ende an dem dem Zylinderboden 23 gegenüber liegenden Zylinderboden 27 angreift.

Zur Führung des Ventilkörpers 14 ist an dem Zylinderboden 27 ein Führungsstift 28 vorgesehen, der in eine koaxiale Längsbohrung in dem Ansatz 21 eingreift.

Durch den Spalt 29 zwischen der Öffnung 24 in dem Zylinderboden 23 und dem Ansatz 21 strömt Verbrennungsgas aus der Austrittskammer 17 in den Arbeitsraum 31 zwischen dem Kolben 26 und dem Zylinderboden 23, und durch den Spalt 32 zwischen dem Zylinder 22 und dem Kolben 26 wird der weitere Arbeitsraum 33 mit Verbrennungsgas gefüllt. Dadurch werden die Schwingungen des Ventilkörpers 14 gedämpft.

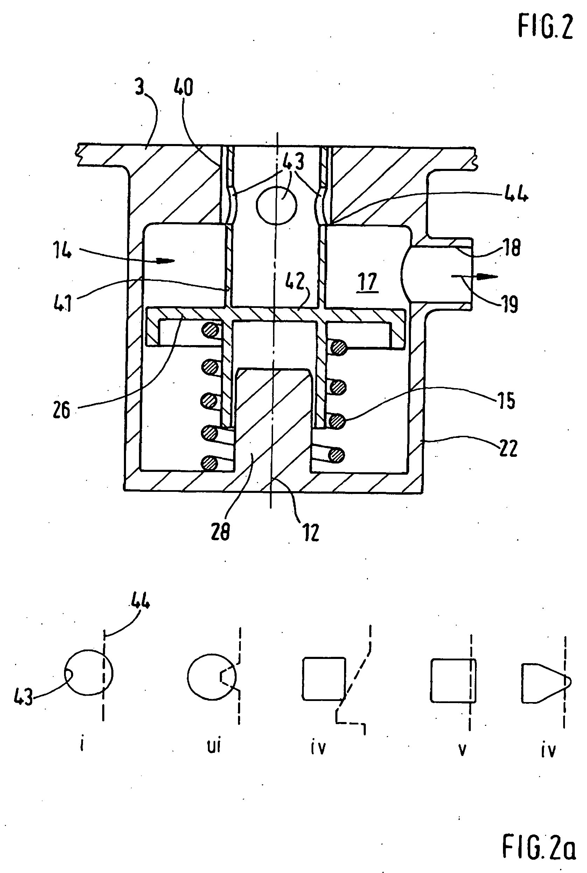

Bei der Ausführungsform nach Figur 2 ist im Brennkammerboden 3 eine Zylinderbohrung 40 vorgesehen. Der Ventilkörper 14 wird durch einen in der Zylinderbohrung 40 verschiebbar geführten Hohlkolben 41 gebildet, also ein Rohr mit einem Boden bzw. einer Trennwand 42.

Der zu der in Figur 2 nicht dargestellten Brennkammer hin offene Hohlkolben 41 mit der Trennwand 42 weist an seiner Umfangswand mehrere Auslassöffnungen 43 in der gleichen Axialposition auf, wobei die von der Brennkammer abgewandte Kante der Zylinderbohrung 40 die Steuerkante 44 bildet, die je nach axialer Position des Hohlkolbens 41 die Auslassöffnungen 43 mehr oder weniger abdeckt und dadurch den Querschnitt der Auslassöffnungen 43 regelt.

Das aus den Auslassöffnungen 43 austretende Verbrennungsgas tritt wie bei der Ausführungsform nach Figur 1 dann in die Austrittskammer 17 ein und von dort über den Gasaustritt 18 zum Verbraucher 19.

Wie nach Figur 1 ist auch nach Figur 2 eine Dämpfungseinrichtung mit Kolben 26, Zylinderwand 22 und einem Arbeitsraum 33 sowie eine Druckfeder 15 zur Belastung des Ventilkörpers 14 in die den Querschnitt der Auslassöffnungen 43 reduzierende Position vorgesehen.

In Figur 2a i) bis iv) sind neben einer geraden Steuerkante 44 und kreisförmigen Auslassöffnungen 43 gemäß i) - iv) weitere mögliche Ausbildungen der Auslassöffnungen 43 bzw. der Steuerkante 44 schematisch dargestellt.

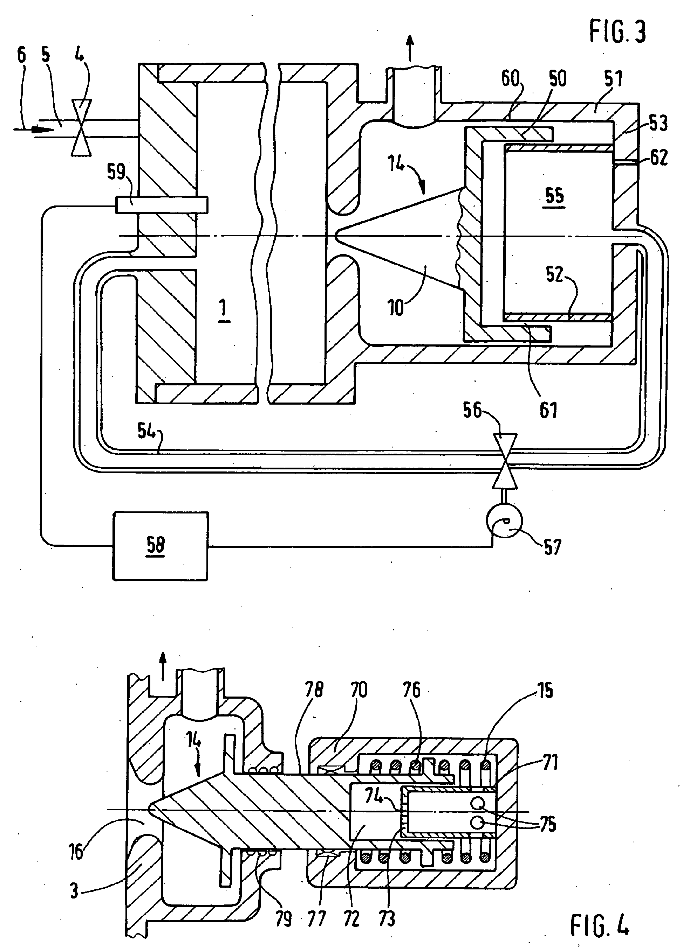

Während bei den Ausführungsformen nach Figur 1 und 2 eine passive Regelung des Drucks in dem Brennraum 1 erfolgt, ist in Figur 3 eine aktive Regelung des Brennkammerdrucks dargestellt und zwar beispielsweise für einen monergolen Treibstoff 6, der über die Leitung 5 zugeführt wird.

Dabei ist der als Kegel 10 ausgebildete Ventilkörper 14 auf einem Kolben 50 angeordnet, der in dem mit der Brennkammer 1 verbundenen Zylinder 51 verschiebbar geführt ist. Der Kolben 50 übergreift zudem einen Innenzylinder 52, der am Boden 53 des Zylinders 51 befestigt ist.

Der Kolben 50 wird mit dem Verbrennungsgas in der Brennkammer 1 in eine Position belastet, in der der ringförmige Querschnitt der Auslassöffnung 16 verkleinert wird. Dazu ist eine Leitung 54 vorgesehen, die die Brennkammer 1 mit der Zylinderkammer 55 verbindet. Die Leitung 54 ist mit einem Steuerventil 56 versehen, das von einem Antrieb 57 betätigt wird, der von einer Steuereinheit 58 angesteuert wird, die an einen Druckgeber 59 angeschlossen ist, der den Druck in der Brennkammer 1 erfasst. Damit nimmt der Ventilkörper 14 abhängig von der Druckdifferenz zwischen der Brennkammer 1 und der Zylinderkammer 55 die korrekte Position ein.

Über die Spalte 60, 61 zwischen dem Kolben 50 und dem Zylinder 51 bzw. in den Zylinder 52 hinaus, können zur Dämpfung von Oszillationen des Ventilkörpers 14 weitere Maßnahmen ergriffen werden, beispielsweise die Kapillare 62 im Zylinderboden 53. Die Kapillare 62 ist dabei derart bemessen, dass im Falle einer Verminderung des Drucks in der Brennkammer 1 auch der Druck in der Zylinderkammer 55 bei geschlossenen Steuerventil 56 entsprechend abfällt.

Bei der Ausführungsform nach Figur 4 ist die Druckfeder 15 oder dergleichen Einrichtung, die den Ventilkörper 14 in die Position belastet, in der der Querschnitt der Auslassöffnung 16 verkleinert wird, in einem separaten Gehäuse 70 vorgesehen und damit von den heiße Gase führenden Teilen abgekoppelt, desgleichen die Dämpfungseinrichtung.

Die Dämpfungseinrichtung wird durch einen am Boden des zylindrischen Gehäuses 70 angeordneten Dämpfungszylinder 71 gebildet, der in einen am Ventilkörper 14 befestigten Hubraum 72 eingreift. Der Dämpfungszylinder 71 und der Hubraum 72 sind beispielsweise mit einer Hydraulikflüssigkeit als Fluid gefüllt. In dem Dämpfungszylinder 71 sind sowohl im Boden 73 wie im Umfang Fluiddurchlässe 74 bzw. 75 vorgesehen, damit das Fluid zwischen dem Inneren des Dämpfungszylinders 71 und dem Hubraum 72 bzw. dem Raum, der zwischen dem Zylindergehäuse 70 und dem Dämpfungszylinder 71 vorgesehen ist, hin- und herströmen kann. Zudem ist zur Ausübung einer Gegenkraft eine Gegendruckfeder 76 vorgesehen.

Das Gehäuse 70 ist mit einer Dichtung 77 versehen, um den Ansatz 78 abzudichten, der den Hubraum 72 mit dem Ventilkörper 14 verbindet. Gegenüber den Verbrennungsgasen wird der Ansatz 78 mit einer Labyrinthdichtung 79 abgedichtet.

Bei der Ausführungsform nach Figur 4 wird der Antrieb des Ventilkörpers 14 nicht hohen Temperaturen und insbesondere nicht hohen Temperaturschwankungen oder -gradienten ausgesetzt. Dadurch wird die Auslegung erleichtert und die Steuerpräzision, insbesondere bei längerer Betriebsdauer verbessert.

Es sind weitere zahlreiche Ausgestaltungen des erfindungsgemäßen Gasgenerators möglich. So kann beispielsweise das Gehäuse 70 mit einer Flüssigkeit oder einem Gas extern gekühlt werden.

Weiterhin kann die Brennkammer statt einer Öffnung 13 bzw. 24 mit zwei und mehr Öffnungen 13 bzw. 24 versehen sein, die zumindest teilweise mit der erfindungsgemäßen Austrittsquerschnittsöffnungsregelung versehen sein können. Damit kann beispielsweise das Querschubsteuerelement eines Flugkörpers erfindungsgemäß gesteuert werden.

## Patentansprüche

1. Gasgenerator mit wenigstens einem Tank und mit einer Brennkammer (1), der mit einem fließfähigen, anzündträgen Treibstoff (6) betreibbar ist und die wenigstens eine Auslassöffnung für das Verbrennungsgas aufweist, sowie mit einer Einrichtung zur Regelung des Querschnitts der Auslassöffnung (16, 43) des Gasgenerators , die so konfiguriert ist, dass im Betrieb der Druck in der Brennkammer (1) oberhalb eines Mindestdrucks zur Verbrennung des fließfähigen, anzündträgen Treibstoffs (6) aufrecht erhalten wird, **dadurch gekennzeichnet, dass** die Brennkammer (1) einen Brennkammerboden (3) umfasst, in dem eine Zylinderbohrung (40) vorgesehen ist, und dass die Einrichtung ein Ventilkörper (14) ist, der einen zur Brennkammer (1) hin offenen, in dieser Zylinderbohrung (40) verschiebbaren Hohlkolben (41) umfasst, der wenigstens eine Auslassöffnung (43) aufweist, die wenigstens eine Auslassöffnung (43) des Hohlkolbens (41) an seiner Umfangswand gebildet wird, und dass der Querschnitt der Auslassöffnung (43) des in der Zylinderbohrung (40) verschiebbaren Hohlkolbens (41) durch die Steuerkante (44) der Zylinderbohrung (40) geregelt wird.

2. Gasgenerator nach Anspruch 1, **dadurch gekennzeichnet, dass** eine Einrichtung zur Dämpfung des Ventilkörpers (14) vorgesehen ist.

3. Gasgenerator nach Anspruch 2, **dadurch gekennzeichnet, dass** die Dämpfungseinrichtung mit dem Verbrennungsgas beaufschlagbar ist.

4. Gasgenerator nach Anspruch 2, **dadurch gekennzeichnet, dass** die Dämpfungseinrichtung einen Kolben (26), eine Zylinderwand (22) und einen Arbeitsraum (33) sowie eine Druckfeder (15) aufweist.

5. Gasgenerator nach Anspruch 1, **dadurch gekennzeichnet, dass** er eine Anzündvorrichtung aufweist.

6. Gasgenerator nach Anspruch 1, **dadurch gekennzeichnet, dass** der Treibstoff (6) ein monergoler Treibstoff ist.

7. Gasgenerator nach Anspruch 6, **dadurch gekennzeichnet, dass** der monergole Treibstoff (6) ein Treibstoff ist, der wenigstens einen bei Raumtemperatur flüssigen, wenigstens eine Nitrogruppe enthaltenden Kohlenwasserstoff aufweist.

8. Gasgenerator nach Anspruch 1, **dadurch gekennzeichnet, dass** zur Verbrennung des Treibstoffs (6) ein Oxidationsmittel (9) vorgesehen ist.

9. Gasgenerator nach Anspruch 1, **dadurch gekennzeichnet, dass** der fließfähige anzündträge Treibstoff (6) ein gelförmiger Treibstoff ist.

10. Gasgenerator nach Anspruch 9, **dadurch gekennzeichnet, dass** der gelförmige Treibstoff (6) feste Brennstoffteilchen enthält.

11. Gasgenerator nach einem der vorstehenden Ansprüche, **dadurch gekennzeichnet, dass** der Treibstoff einen Zusatz aufweist, der nicht im Gasgenerator sondern in einer der Brennkammer (1) nachgeschalteten Brennnkammer unter Zufuhr von Luftsauerstoff oder einem anderen Oxidator verbrennt.

12. Gasgenerator nach einem der vorstehenden Ansprüche, **dadurch gekennzeichnet, dass** der Treibstoff einen Zusatz aufweist, der im Gasgenerator in kleinere Bestandteile aufgespalten wird, die in einer nachgeschalteten Brennkammer mit Luftsauerstoff oder einem Oxidator verbrannt werden.

13. Verwendung des Gasgenerators nach einem der vorstehenden Ansprüche zur Bahn- und/oder Lagesteuerung von Flugkörpern, insbesondere exoatmosphärischen Flugkörpern.

## Claims

1. Gas generator with at least one tank and with a combustion chamber (1) which can be operated by means of a free-flowing, not easily ignitable propellant (6) and which has at least one outlet opening for the combustion gas, and with a device for controlling the cross section of the outlet opening (16, 43) of the gas generator which is configured such that, during operation, the pressure in the combustion chamber (1) is maintained above a minimum pressure for combusting the free-flowing, not easily ignitable propellant (6), **characterized in that** the combustion chamber (1) comprises a combustion chamber floor (3) in which a cylinder bore (40) is provided, and that the device is a valve body (14) which comprises a hollow piston (41) which is open towards the combustion chamber (1) and movable in said cylinder bore (40) and which has at least one outlet opening (43), the at least one outlet opening (43) of the hollow piston (41) is formed on the circumferential wall thereof, and that the cross section of the outlet opening (43) of the hollow piston (41) movable in the cylinder bore (40) is controlled by the control edge (44) of the cylinder bore (40).

2. Gas generator according to claim 1, **characterized in that** a device is provided for damping the valve body (14).

3. Gas generator according to claim 2, **characterized in that** the damping device can be charged with the combustion gas.

4. Gas generator according to claim 2, **characterized in that** the damping device has a piston (26), a cylinder wall (22) and a working space (33) as well as a pressure spring (15).

5. Gas generator according to claim 1, **characterized in that** it comprises an ignition device.

6. Gas generator according to claim 1, **characterized in that** the propellant (6) is a monopropellant.

7. Gas generator according to claim 6, **characterized in that** the monopropellant (6) is a propellant which comprises at least one hydrocarbon being liquid at room temperature and containing at least one nitro group.

8. Gas generator according to claim 1, **characterized in that** an oxidizing agent (9) is provided for combusting the propellant (6).

9. Gas generator according to claim 1, **characterized in that** the free-flowing, not easily ignitable propellant (6) is a gel-type propellant.

10. Gas generator according to claim 9, **characterized in that** the gel-type propellant (6) contains solid propellant particles.

11. Gas generator according to any of the preceding claims, **characterized in that** the propellant comprises an additive which does not combust in the gas generator but in a combustion chamber downstream of the combustion chamber (1) while atmospheric oxygen or any other oxidizer is supplied.

12. Gas generator according to any of the preceding claims, **characterized in that** the propellant comprises an additive which is broken down into smaller components in the gas generator, said components being combusted in a downstream combustion chamber with atmospheric oxygen or an oxidizer.

13. Use of the gas generator according to any of the preceding claims for controlling the path and/or position of missiles, in particular exo-atmospheric missiles.

## Revendications

1. Générateur de gaz comportant au moins un réservoir et une chambre de combustion (1), lequel peut fonctionner avec un carburant (6) fluide à allumage lent et présente ledit au moins un orifice de sortie pour le gaz de combustion, ainsi qu'un dispositif pour la régulation de la section transversale de l'orifice de sortie (16, 43) du générateur de gaz, qui est configuré de telle sorte que pendant le fonctionnement, la pression dans la chambre de combustion (1) est maintenue au-dessus d'une pression minimum pour brûler le carburant (6) fluide à allumage lent, **caractérisé en ce que** la chambre de combustion (1) présente un fond de chambre de combustion (3) dans lequel est prévu un alésage de cylindre (40), et **en ce que** le dispositif est un corps de soupape (14) qui comprend un piston creux (41) ouvert vers la chambre de combustion (1) et qui peut se déplacer dans cet alésage de cylindre (40), lequel présente au moins un orifice de sortie (43), ledit au moins un orifice de sortie (43) du piston creux (41) étant formé sur sa paroi périphérique, et **en ce que** la section transversale de l'orifice de sortie (43) du piston creux (41) susceptible de se déplacer dans l'alésage de cylindre (40) est régulé par une arête d'attaque (44) de l'alésage de cylindre (40).

2. Générateur de gaz selon la revendication 1, **caractérisé en ce qu'**il est prévu un dispositif pour amortir le corps de soupape (14).

3. Générateur de gaz selon la revendication 2, **caractérisé en ce que** le dispositif amortisseur peut être sollicité avec le gaz de combustion.

4. Générateur de gaz selon la revendication 2, **caractérisé en ce que** le dispositif amortisseur présente un piston (26), une paroi de cylindre (22) et une enceinte de travail (33) ainsi qu'un ressort de pression (15).

5. Générateur de gaz selon la revendication 1, **caractérisé en ce qu'**il présente un dispositif d'allumage.

6. Générateur de gaz selon la revendication 1, **caractérisé en ce que** le carburant (6) est un monergol.

7. Générateur de gaz selon la revendication 6, **caractérisé en ce que** le monergol (6) est un carburant qui présente au moins un hydrocarbure liquide à température ambiante et contenant au moins un groupe nitro.

8. Générateur de gaz selon la revendication 1, **caractérisé en ce qu'**il est prévu un agent oxydant (9) pour la combustion du carburant (6).

9. Générateur de gaz selon la revendication 1, **caractérisé en ce que** le carburant (6) fluide à allumage lent est un carburant en forme de gel.

10. Générateur de gaz selon la revendication 9, **caractérisé en ce que** le carburant (6) en forme de gel contient des particules de combustible solides.

11. Générateur de gaz selon l'une des revendications précédentes, **caractérisé en ce que** le carburant présente un additif qui brûle non pas dans le générateur de gaz mais dans une chambre de combustion montée en aval de la chambre de combustion (1) en apportant de l'oxygène de l'air ou un autre agent oxydant.

12. Générateur de gaz selon l'une des revendications précédentes, **caractérisé en ce que** le carburant présente un additif qui est décomposé dans le générateur de gaz en plus petits constituants qui sont brûlés dans la chambre de combustion montée en aval par de l'oxygène de l'air ou par un autre agent oxydant.

13. Utilisation du générateur de gaz selon l'une des revendications précédentes, pour la commande de trajectoire et/ou de position de missiles, en particulier de missiles exo-atmosphériques.
